# EUROPÄISCHE PATENTANMELDUNG

(11) **EP 1 283 370 A2**
(43) Veröffentlichungstag der Anmeldung: **12.02.2003**
(21) Anmeldenummer: 02017348.0
(22) Anmeldetag: 02.08.2002
(51) Int. Cl.: F15B 13/00, F03D 7/02

(54) **Hydraulische Antriebsvorrichtung, insbesondere zur Rotorblattverstellung an einer Windkraftanlage**

(30) Priorität: 10.08.2001 DE 10139536
(71) Anmelder: Bosch Rexroth AG, 97816 Lohr am Main (DE)
(72) Erfinder: Janousch, Hans Peter, 97816 Lohr (DE)

(57) **Zusammenfassung**

Die Erfindung betrifft eine hydraulischen Antriebsvorrichtung insbesondere zur Rotorblattverstellung an einer Windkraftanlage. Es ist bekannt zur Verstellung aller Rotorblätter oder jeweils eines einzelnen Rotorblatts einer Windkraftanlage eine mechanisch mit dem Rotorblatt gekoppelte Kolben-Zylinder-Einheit zu verwenden, die als Hauptbauteile ein Zylindergehäuse und einen darin befindlichen Kolben mit einer Kolbenstange aufweist, wobei ein erstes der beiden Hauptbauteile mit dem Rotorblatt verbunden ist. Wird eine Windkraftanlage abgeschaltet, so sollen die Rotorblätter in eine sichere Endlage verstellt und hydraulisch darin gehalten werden.

Der Erfindung liegt die Aufgabe zugrunde, eine hydraulische Antriebsvorrichtung der skizzierten Art so auszubilden, daß das zu verstellenden Teils innerhalb des Arbeitsbereichs genau und schnell verstellt und in der Endlage sicher gehalten werden kann.

Diese Aufgabe wird dadurch gelöst, daß die Kolben-Zylinder-Einheit reibungsarm ausgebildet ist, daß eine zweite Kolben-Zylinder-Einheit vorhanden ist, die als Hauptbauteile ein zweites Zylindergehäuse und einen darin befindlichen, zweiten Kolben mit einer Kolbenstange und ein auf geringe Leckage ausgelegtes Dichtsystem aufweist und deren maximaler Hub größer als der maximale Hub der ersten Kolben-Zylinder-Einheit ist, und daß das zweite Hauptbauteil der ersten Kolben-Zylinder-Einheit und das entsprechende Hauptbauteil der zweiten Kolben-Zylinder-Einheit fest miteinander verbunden und relativ zum anderen Hauptbauteil der zweiten Kolben-Zylinder-Einheit verfahrbar sind. Mit der leckagearmen, zweiten Kolben-Zylinder-Einheit wird die Endlage sicher erreicht und gehalten, mit der reibungsarmen, ersten Kolben-Zylinder-Einheit ist eine schnelle und genaue Regelung möglich.

## Beschreibung

Die Erfindung betrifft eine hydraulischen Antriebsvorrichtung, die insbesondere zur Rotorblattverstellung an einer Windkraftanlage vorgesehen ist und die die Merkmale aus dem Oberbegriff des Patentanspruchs 1 aufweist.

Es ist bekannt, zur Verstellung aller Rotorblätter oder jeweils eines einzelnen Rotorblatts einer Windkraftanlage eine mechanisch mit dem Rotorblatt gekoppelte Kolben-Zylinder-Einheit zu verwenden, die als Hauptbauteile ein Zylindergehäuse und einen darin befindlichen Kolben mit einer Kolbenstange aufweist, wobei ein erstes der beiden Hauptbauteile mit dem Rotorblatt verbunden ist. Während des Betriebs einer Windkraftanlage ist je nach den Betriebsbedingungen eine bestimmte Winkelposition der Rotorblätter bezüglich ihrer Längsachsen einzuhalten, wobei die Winkelposition in einem relativ kleinen Arbeitsbereich um eine Mittelstellung, zum Beispiel 15 Grad beidseits der Mittelstellung liegt. Die Regelung der Position soll schnell und genau erfolgen. Wird eine Windkraftanlage abgeschaltet, so sollen die Rotorblätter in eine sichere Endlage verstellt und sicher darin gehalten werden. Üblicherweise ist bei hydraulischen Antriebsvorrichtungen mit einer Kolben-Zylinder-Einheit deren Kolben über die Kolbenstange mit dem zu bewegenden Körper verbunden.

Der Erfindung liegt die Aufgabe zugrunde, eine hydraulische Antriebsvorrichtung der bekannten Art so weiterzuentwickeln, daß der zu verstellende Körper innerhalb des Arbeitsbereichs genau und schnell verstellt und in der Endlage sicher gehalten werden kann.

Diese Aufgabe wird dadurch gelöst, daß gemäß dem kennzeichnenden Teil des Patentanspruchs 1 die Kolben-Zylinder-Einheit reibungsarm ausgebildet ist, daß eine zweite Kolben-Zylinder-Einheit vorhanden ist, die als Hauptbauteile ein zweites Zylindergehäuse und einen darin befindlichen, zweiten Kolben mit einer Kolbenstange und ein auf geringe Leckage ausgelegtes Dichtsystem aufweist und deren maximaler Hub größer als der maximale Hub der ersten Kolben-Zylinder-Einheit ist, und daß das zweite Hauptbauteil der ersten Kolben-Zylinder-Einheit und das entsprechende Hauptbauteil der zweiten Kolben-Zylinder-Einheit fest miteinander verbunden und relativ zum anderen Hauptbauteil der zweiten Kolben-Zylinder-Einheit verfahrbar sind. Mit der leckagearmen, zweiten Kolben-Zylinder-Einheit wird die Endlage sicher erreicht und gehalten, mit der reibungsarmen, ersten Kolben-Zylinder-Einheit ist eine schnelle und genaue Regelung möglich.

Bei einer erfindungsgemäßen hydraulischen Antriebsvorrichtung kann gemäß Patentanspruch 2 der Kolben der ersten Kolben-Zylinder-Einheit zur mechanischen Verbindung mit dem beweglichen Körper vorgesehen sein. Entsprechend sind dann die beiden Zylindergehäuse ortsfest zueinander angeordnet und gemeinsam relativ zu dem sich, eventuell über Drehgelenk, gestellfest abstützenden Kolben der zweiten Kolben-Zylinder-Einheit verfahrbar.

Es kann jedoch gemäß Patentanspruch 3 auch das Zylindergehäuse der ersten Kolben-Zylinder-Einheit zur mechanischen Verbindung mit dem beweglichen Körper vorgesehen sein. Dann sind die beiden Kolben fest miteinander verbunden und gemeinsam verfahrbar. Das Zylindergehäuse der zweiten Kolben-Zylinder-Einheit ist dann, eventuell über ein Drehgelenk, gestellfest abgestützt.

Umgekehrt kann gemäß den Patentansprüchen 4 oder 5 auch der Kolben oder das Zylindergehäuse der zweiten Kolben-Zylinder-Einheit zur mechanischen Verbindung mit dem beweglichen Körper vorgesehen sein, wobei dann allerdings die bewegte Masse der Antriebsvorrichtung größer ist als bei einer Ausbildung gemäß den Patentansprüchen 2 oder 3.

Vier Ausführungsbeispiele einer erfindungsgemäßen hydraulischen Antriebsvorrichtung sind in den Zeichnungen dargestellt. Anhand der Figuren dieser Zeichnungen wird die Erfindung nun näher erläutert.

Es zeigen
- Figur 1: das erste Ausführungsbeispiel, bei dem das Zylindergehäuse der ersten Kolben-Zylinder-Einheit zur Verbindung mit dem zu bewegenden Körper vorgesehen ist, im Arbeitsbetrieb,
- Figur 2: das erste Ausführungsbeispiel im Abschaltbetrieb,
- Figur 3: das zweite Ausführungsbeispiel, bei dem der Kolben der ersten Kolben-Zylinder-Einheit zur Verbindung mit dem zu bewegenden Körper vorgesehen ist, im Arbeitsbetrieb,
- Figur 4: das zweite Ausführungsbeispiel im Abschaltbetrieb,
- Figur 5: das dritte Ausführungsbeispiel, bei dem das Zylindergehäuse der zweiten Kolben-Zylinder-Einheit zur Verbindung mit dem zu bewegenden Körper vorgesehen ist, im Arbeitsbetrieb,
- Figur 6: das dritte Ausführungsbeispiel im Abschaltbetrieb,
- Figur 7: das vierte Ausführungsbeispiel, bei dem der Kolben der zweiten Kolben-Zylinder-Einheit zur Verbindung mit dem zu bewegenden Körper vorgesehen ist, im Arbeitsbetrieb und
- Figur 8: das vierte Ausführungsbeispiel im Abschaltbetrieb.

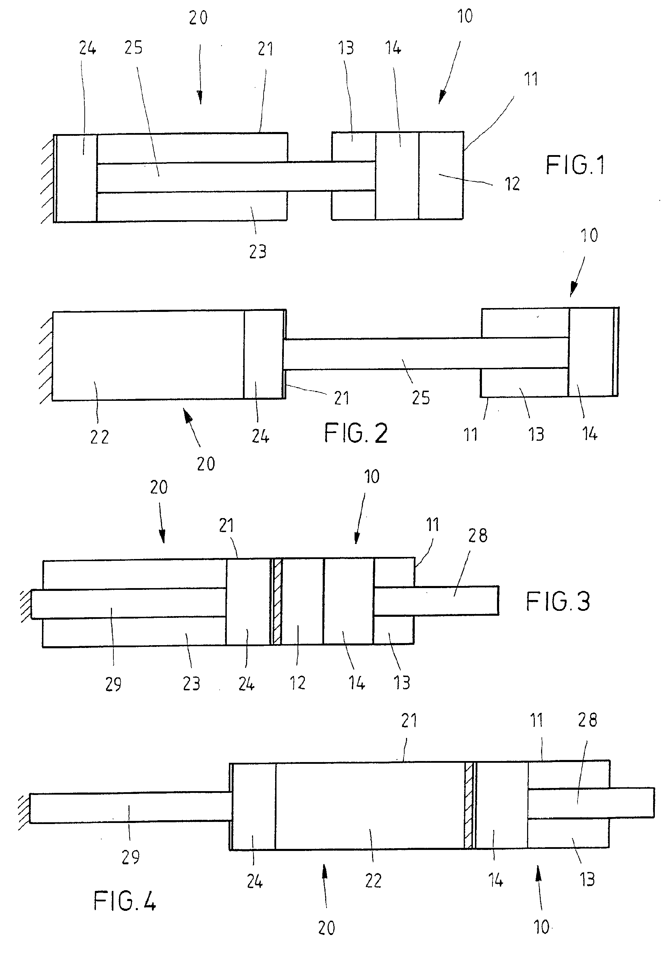

Die hydraulische Antriebsvorrichtung nach den Figuren 1 und 2 ist zur Verstellung eines Rotorblatts einer Windkraftanlage vorgesehen und besitzt eine erste Kolben-Zylinder-Einheit 10 mit einem Zylindergehäuse 11 und mit einem das Innere des Zylindergehäuses in zwei Druckräume 12 und 13 aufteilenden Kolben 14. Das Zylindergehäuse 11 ist mechanisch mit einem nicht dargestellten Rotorblatt verbunden. Die lichten Abstände zwischen dem Kolben 14 und den Stirnseiten des Zylindergehäuses sind gerade so groß, daß die Verstellung eines Rotorblatts vom einen Ende eines Arbeitsbereiches bis zum anderen Ende möglich ist. Der Arbeitsbereich erstreckt sich zum Beispiel über einen Winkel von 15 Grad auf jeder Seite einer Mittelstellung des Rotorblatts, in der sich der Kolben 14, wie in Figur 1 dargestellt, in der Mitte des Zylindergehäuses 11 befindet.

In Flucht zu der Kolben-Zylinder-Einheit 10 ist eine zweite Kolben-Zylinder-Einheit 20 angeordnet, die ein zweites Zylindergehäuse 21 aufweist, das in nicht näher dargestellter Weise an einem Gestell abgestützt ist. Die Abstützung kann zum Beispiel über ein Drehgelenk erfolgen, so daß das Zylindergehäuse 21 gegenüber dem Gestell verschwenkbar ist. Im Inneren des Zylindergehäuses 21 befindet sich ein zweiter Kolben 24, auf dessen einer Seite sich ein Druckraum 22 und auf dessen anderer Seite sich ein Druckraum 23 befindet. Der Kolben 24 ist über eine Kolbenstange 25 fest mit dem Kolben 14 verbunden. Die Querschnitte der beiden Kolben-Zylinder-Einheit 10 und 20 und somit zum einen die kolbenstangenseitigen, ringförmigen Wirkflächen und zum anderen die kolbenstangenabseitigen Wirkflächen der Kolben 14 und 24 sind gleich groß.

Im Arbeitsbetrieb einer Windkraftanlage ist der kolbenstangenseitige Druckraum 23 der Kolben-Zylinder-Einheit 20 mit einem so hohen Druck beaufschlagt, so daß sich der Kolben 24 an der kolbenstangenabseitigen Stirnseite des Zylindergehäuses 21 befindet und dort gegen die am Kolben 14 angreifenden Druckkräfte gehalten wird. Der erste Kolben 14 nimmt somit eine feste Position ein. In der in Figur 1 gezeigten Mittelstellung zwischen dem ersten Zylindergehäuse 11 und dem ersten Kolben 14 besteht zwischen den beiden Zylindergehäusen 11 und 21 ein so großer lichter Abstand, daß das Zylindergehäuse 10 innerhalb des Arbeitsbereichs frei gegenüber dem Zylindergehäuse 21 der zweiten Kolben-Zylinder-Einheit 20 bewegbar ist. Die Position des Rotorblatts innerhalb des Arbeitsbereichs wird nun dadurch geregelt, daß durch Zufuhr und Abfuhr von Druckmittel in die und aus den Druckräumen 12 und 13 der ersten Kolben-Zylinder-Einheit 10 das Zylindergehäuse 11 gegenüber dem Kolben 14 verschoben wird. Damit die Regelung schnell und genau sein kann, hat die Kolben-Zylinder-Einheit 10 im Hinblick auf die Reibung Servoqualität. Sowohl die Abdichtung zwischen dem Kolben 14 als auch der Kolbenstange 25 und dem Zylindergehäuse 11 ist also zum Beispiel durch eine hydrostatische Keilspaltlagerung, wie sie in dem Buch Der Hydraulik Trainer, Band 1, Ausgabe 1991, Seite 142 beschrieben ist, reibungsarm gestaltet. Diese Reibungsarmut ist mit einer erhöhten inneren Leckage behaftet, was jedoch die Regelgüte nicht einschränkt, da im Betriebsmodus der Anlage eine Pumpe zur Druckmittelförderung in Betrieb ist.

Zum Abschalten der Windkraftanlage sind die Rotorblätter aus dem Arbeitsbereich heraus um einen großen Winkel um ihre Längsachse in eine Endlage zu verstellen und dort gegen angreifende äußere Kräfte zu halten. Von der Mitte des Arbeitsbereiches aus kann der Verstellwinkel zum Beispiel 90 Grad betragen. Beim Abschalten werden die drei Druckräume 12, 13 und 23 zu einem Tank entlastet. Der Druckraum 22 wird von einem Hydrospeicher her mit Druck beaufschlagt, so daß der Kolben 24 die Kolbenstange 25 aus dem Zylindergehäuse 21 heraus- und in das Zylindergehäuse 11 hineinfährt. Der Kolben 14 stößt gegen die kolbenstangenabseitige Stirnseite des Zylindergehäuses 11 und nimmt dieses bis in die Endlage mit. Der dann erreichte Zustand der Antriebsvorrichtung ist in Figur 2 gezeigt. Damit der Druck im Druckraum 22 aus dem Hydrospeicher heraus über einen sehr langen Zeitraum aufrechterhalten werden kann, ist die Kolben-Zylinder-Einheit 20 mit standardmäßigen und leckagefreien oder zumindest leckagearmen Dichtsystemen zwischen dem Kolben 24, der Kolbenstange 25 und dem Zylindergehäuse 21 ausgestattet, wie sie in dem Buch Der Hydraulik Trainer, Band 1, Ausgabe 1991 ab Seite 127 beschrieben sind. In der leckagebehafteten Kolben-Zylinder-Einheit 10 muß kein Druck aufrechterhalten werden, da sich das Zylindergehäuse 11 aufgrund mechanischer Beaufschlagung durch den Kolben 14 an einem Anschlag befindet.

Um den Arbeitsbetrieb wieder aufnehmen zu können, wird dem Druckraum 23 der Kolben-Zylinder-Einheit 20 Druckmittel zugeführt, so daß sich der Kolben 24 wieder in die in Figur 1 gezeigte Position bewegt. Die Regelung innerhalb des Arbeitsbereichs der Rotorblätter geschieht dann wieder mit der Kolben-Zylinder-Einheit 10.

Bei dem Ausführungsbeispiel nach den Figuren 3 und 4 sind die beiden Zylindergehäuse 11 und 21 der beiden Kolben-Zylinder-Einheiten 10 und 20 zu einer gemeinsam bewegbaren Einheit zusammengefaßt. Die beiden Kolben 14 und 24 haben jeweils eine eigene Kolbenstange 28 bzw. 29, die von den einander abgewandten Seiten der Kolben abstehen. Der Kolben 24 der zweiten Kolben-Zylinder-Einheit 20 ist über seine Kolbenstange 29 gestellfest aufgehängt. Die Kolbenstange 28 des Kolbens 14 der ersten Kolben-Zylinder-Einheit 10 ist mechanisch mit einem Rotorblatt verbunden. Die Querschnitte der beiden Kolben-Zylinder-Einheiten und damit die entsprechenden Wirkflächen an den Kolben sind wiederum gleich groß.

Im Arbeitsbetrieb wird die Einheit aus den beiden Zylindergehäusen 11 und 21 durch Druckbeaufschlagung des Druckraums 23 der Kolben-Zylinder-Einheit 20 in Anlage an dem Kolben 24 und damit in einer festen Position gehalten, so daß mit Hilfe der Kolben-Zylinder-Einheit 10, die wiederum in reibungsarmer Qualität ausgebildet ist, durch Verfahren des Kolbens 14 relativ zum Zylindergehäuse 11 die Position des Rotorblattes innerhalb des Arbeitsbereichs geregelt werden kann.

Zum Abschalten der Windkraftanlage werden die drei Druckräume 12, 13 und 23 zu einem Tank entlastet. Der Druckraum 22 wird von einem Hydrospeicher her mit Druck beaufschlagt, so daß die Einheit aus den beiden Zylindergehäusen 11 und 21 in der Ansicht nach den Figuren 3 und 4 nach rechts verschoben wird. Je nach augenblicklicher Position des Kolbens 14 wird dieser nach einem entsprechenden Weg der Zylindergehäuse mitgenommen und in die in Figur 4 gezeigte Endlage gebracht.

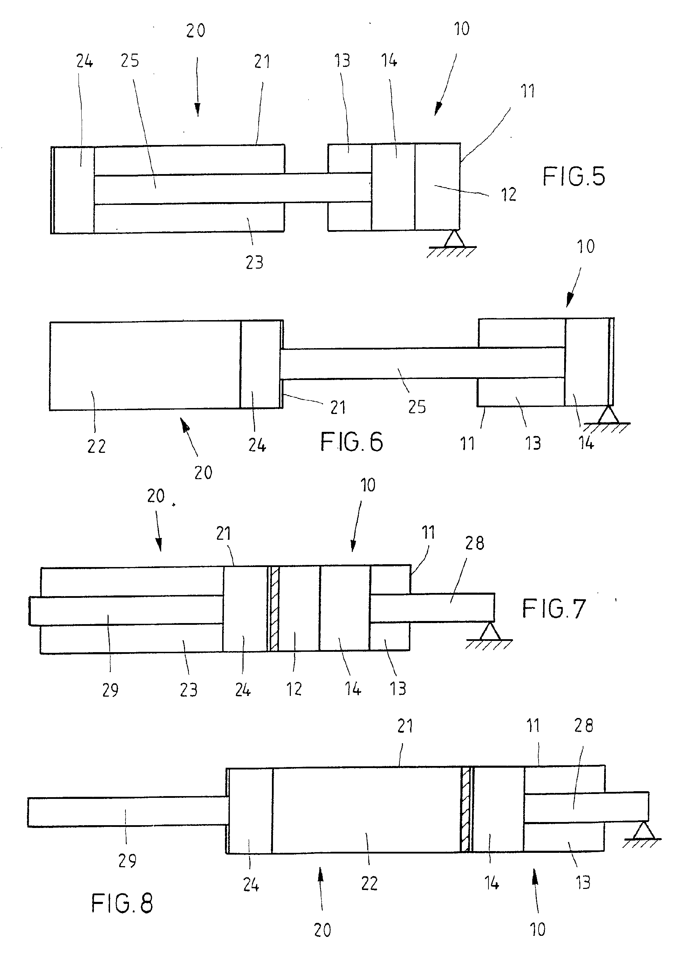

Das Ausführungsbeispiel nach den Figuren 5 und 6 stellt insofern eine kinematische Umkehrung des ersten Ausführungsbeispiels dar, als jetzt das Zylindergehäuse 11 der ersten Kolben-Zylinder-Einheit 10 ortsfest abgestützt und das Zylindergehäuse 21 der zweiten Kolben-Zylinder-Einheit 20 zur mechanischen Verbindung mit dem zu bewegenden Körper vorgesehen ist. Ansonsten sind die beiden Antriebsvorrichtungen nach den Figuren 1 und 2 sowie nach den Figuren 5 und 6 völlig gleich aufgebaut. Im Arbeits- und Abschaltbetrieb werden bei dem Ausführungsbeispiel nach den Figuren 5 und 6 die beiden Kolben 14 und 24 und das Zylindergehäuse 21 relativ zu dem ortsfest abgestützten Zylindergehäuse 11 der ersten Kolben-Zylinder-Einheit 10 bewegt. Das Zylindergehäuse 11 ändert also seine Lage nicht. Nur aus Gründen der zeichnerischen Darstellung ist es in Figur 6 gegenüber der Figur 5 verschoben.

Das Ausführungsbeispiel nach den Figuren 7 und 8 stellt insofern eine kinematische Umkehrung des zweiten Ausführungsbeispiels dar, als jetzt der Kolben 14 der ersten Kolben-Zylinder-Einheit 10 ortsfest abgestützt und der Kolben 24 der zweiten Kolben-Zylinder-Einheit 20 zur mechanischen Verbindung mit dem zu bewegenden Körper vorgesehen ist. Ansonsten sind die beiden Antriebsvorrichtungen nach den Figuren 3 und 4 sowie nach den Figuren 7 und 8 völlig gleich aufgebaut. Im Arbeits- und Abschaltbetrieb werden bei dem Ausführungsbeispiel nach den Figuren 7 und 8 die beiden Zylindergehäuse 11 und 21 und der Kolben 24 21 relativ zu dem ortsfest abgestützten Kolben 14 der ersten Kolben-Zylinder-Einheit 10 bewegt. Der Kolben 14 ändert also seine Lage nicht. Nur aus Gründen der zeichnerischen Darstellung ist er in Figur 8 gegenüber der Figur 7 verschoben.

## Patentansprüche

1. Hydraulische Antriebsvorrichtung zur Verstellung eines beweglichen Körpers innerhalb eines Arbeitsbereichs und in eine sichere Endlage, insbesondere zur Rotorblattverstellung an einer Windkraftanlage, mit einer Kolben-Zylinder-Einheit (10), die als Hauptbauteile ein Zylindergehäuse (11) und einen darin befindlichen Kolben (14) mit einer Kolbenstange (25; 28) aufweist, wobei ein erstes Hauptbauteil (11; 14) mit dem beweglichen Körper koppelbar ist,
**dadurch gekennzeichnet, daß** die Kolben-Zylinder-Einheit (10) reibungsarm ausgebildet ist, **daß** eine zweite Kolben-Zylinder-Einheit (20) vorhanden ist, die als Hauptbauteile ein zweites Zylindergehäuse (21) und einen darin befindlichen, zweiten Kolben (24) mit einer Kolbenstange (25; 29) und ein auf geringe Leckage ausgelegtes Dichtsystem aufweist und deren maximaler Hub größer als der maximale Hub der ersten Kolben-Zylinder-Einheit (10) ist, und **daß** das zweite Hauptbauteil (14; 11) der ersten Kolben-Zylinder-Einheit (10) und das entsprechende Hauptbauteil (24; 21) der zweiten Kolben-Zylinder-Einheit (20) fest miteinander verbunden und relativ zum anderen Hauptbauteil (21; 24) der zweiten Kolben-Zylinder-Einheit (20) verfahrbar sind.

2. Hydraulische Antriebsvorrichtung nach Anspruch 1, **dadurch gekennzeichnet, daß** der Kolben (14) der ersten Kolben-Zylinder-Einheit (10) mechanisch mit dem beweglichen Körper verbindbar ist.

3. Hydraulische Antriebsvorrichtung nach Anspruch 1, **dadurch gekennzeichnet, daß** das Zylindergehäuse (11) der ersten Kolben-Zylinder-Einheit (10) mechanisch mit dem beweglichen Körper verbindbar ist.

4. Hydraulische Antriebsvorrichtung nach Anspruch 1, **dadurch gekennzeichnet, daß** der Kolben (24) der zweiten Kolben-Zylinder-Einheit (20) mechanisch mit dem beweglichen Körper verbindbar ist.

5. Hydraulische Antriebsvorrichtung nach Anspruch 1, **dadurch gekennzeichnet, daß** das Zylindergehäuse (21) der ersten Kolben-Zylinder-Einheit (20) mechanisch mit dem beweglichen Körper verbindbar ist.
